# EUROPEAN PATENT APPLICATION

(11) **EP 3 663 364 A1**
(43) Date of publication of application: **10.06.2020**
(21) Application number: 18841285.2
(22) Date of filing: 21.06.2018
(51) Int. Cl.: C09D 4/02, B32B 27/16, B32B 27/30, B32B 27/38, C08G 59/24, C09D 4/06, C09D 5/00, C09D 133/04, C09D 163/00, C09D 201/00

(54) **RESIN COMPOSITION FOR FORMING HARD COATING LAYER**

(30) Priority: 04.08.2017 JP 2017151987
(71) Applicant: Daicel Corporation, Osaka-shi, Osaka 530-0011 (JP)
(72) Inventor: EGAWA, Tomoya, Himeji-shi Hyogo 671-1283 (JP)
(74) Representative: Grünecker Patent- und Rechtsanwälte PartG mbB
(86) International application number: PCT/JP2018/023681
(87) International publication number: WO 2019/026460

(57) **Abstract**

Provided is a resin composition that can form a cured product having crack resistance, a high surface hardness, and excellent scratch resistance. The resin composition according to an embodiment of the present invention contains components (A) to (E) below. Component (A): a polyfunctional alicyclic epoxy compound having a molecular weight of less than 10000; component (B): a polyfunctional (meth)acrylic compound having a molecular weight of less than 10000; component (C): a linear polymer having, in a side chain thereof, a functional group that is reactive with a functional group of the component (A) and/or the component (B), and having a weight average molecular weight (in terms of polystyrene by GPC) of 10000 or greater; component (D): a photocationic polymerization initiator; and component (E): a photoradical polymerization initiator.

## Description

### Technical Field

The present invention relates to a resin composition for forming a hard coating layer, and a hard coating film, an electronic device, and a molded product each having a hard coating layer formed from the cured product thereof. The present application claims priority to JP 2017-151987 filed to Japan on August 4, 2017, the content of which is incorporated herein.

### Background Art

In touch screens and displays of electronic devices, such as liquid crystal televisions, liquid crystal displays, notebook-size personal computers, mobile displays, tablet computers, and smartphones, a hard coating film having a hard coating layer with a high surface hardness and scratch resistance is adhered, and thus effects of preventing a screen from being scratched, preventing fingerprint on a screen, and facilitating cleaning of dirt attached on a screen. Furthermore, in lenses and sensors, a hard coating layer is provided to prevent scratches on a surface and maintain high performances. In addition, application of a hard coating layer is also considered to be provided for interior components, exterior components, electrical components, windshields, and the like of automobiles to maintain visual appearance and prevent decrease in transmittance. Furthermore, in recent years, further enhancement of the scratch resistance and the surface hardness of a hard coating layer has been demanded.

As a method of enhancing scratch resistance of a hard coating layer, a method that blends inorganic particles of alumina, silica, titanium oxide, or the like in a resin (i.e. organic-inorganic hybrid) has been known (Patent Documents 1 to 3, and the like).

Furthermore, a widely used means of enhancing the surface hardness of a hard coating layer is polyfunctionalization of a resin for forming the hard coating layer. Patent Document 4 describes use of a tri- or higher-functional radically polymerizable compound and a bifunctional epoxy compound.

### Citation List

### Patent Document

Patent Document 1: JP 02-060696 B2
Patent Document 2: JP 2005-076005 A
Patent Document 3: JP 2003-034761 A
Patent Document 4: JP 08-073771 A

### Summary of Invention

### Technical Problem

It was found that, as a result of enhanced curability when inorganic particles are blended in a resin for forming a hard coating layer or when a resin is subjected to polyfunctionalization, scratch resistance and surface hardness of the hard coating layer is enhanced; however, since the obtained cured product is brittle and has a great difference of coefficient of thermal expansion from that of a substrate, the hard coating layer is easily cracked by a stress caused by cure shrinkage in the case where the hard coating layer is subjected to thermal shock or in the case where the thickness of the hard coating layer is increase.

Therefore, an object of the present invention is to provide a resin composition that can form a cured product having crack resistance, a high surface hardness, and excellent scratch resistance and that can be used for forming a hard coating layer.

Another object of the present invention is to provide a hard coating film, an electronic device, and a molded product that are provided with a hard coating layer having crack resistance, a high surface hardness, and excellent scratch resistance.

### Solution to Problem

As a result of diligent research to solve the problems described above, the present inventor found that a cured product having excellent crack resistance and scratch resistance and a high surface hardness can be obtained by irradiating with an active energy ray a resin composition containing a polymerization initiator and a linear polymer having a polyfunctional alicyclic epoxy compound, a polyfunctional (meth)acrylic compound, and a functional group that is reactive with at least one of an epoxy group of the polyfunctional alicyclic epoxy compound or a (meth)acryloyl group of the polyfunctional (meth)acrylic compound. The present invention has been completed based on these findings.

That is, an embodiment of the present invention provides a resin composition for forming a hard coating layer, the resin composition containing components (A) to (E) below.
Component (A): a polyfunctional alicyclic epoxy compound having a molecular weight of less than 10000
Component (B): a polyfunctional (meth)acrylic compound having a molecular weight of less than 10000
Component (C): a linear polymer having, in a side chain thereof, a functional group that is reactive with a functional group of the component (A) and/or the component (B), and having a weight average molecular weight (in terms of polystyrene by GPC) of 10000 or greater
Component (D): a photocationic polymerization initiator
Component (E): a photoradical polymerization initiator

Furthermore, an embodiment of the present invention provides the resin composition for forming a hard coating layer described above, where the component (C) is a linear acrylic polymer having a (meth)acryloyl group and/or a cyclic ether group as a pendant group.

Furthermore, an embodiment of the present invention provides the resin composition for forming a hard coating layer described above, where an equivalent of the functional group of the component (C) is from 5000 to 100 g/mol.

Furthermore, an embodiment of the present invention provides the resin composition for forming a hard coating layer described above, where a content of the component (C) is from 50 to 2 parts by weight per 100 parts by weight of the total of the component (A) and the component (B) contained in the resin composition for forming a hard coating layer.

Furthermore, an embodiment of the present invention provides the resin composition for forming a hard coating layer described above, where the component (A) is a compound represented by Formula (a) below: 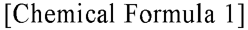 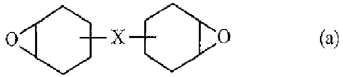 where, X represents a single bond or a linking group, and an alkyl group may be bonded to one or more carbon atoms constituting a cyclohexane ring.

Furthermore, an embodiment of the present invention provides a hard coating film including a hard coating layer formed from a cured product of the resin composition for forming a hard coating layer described above.

Furthermore, an embodiment of the present invention provides an electronic device including a hard coating layer formed from a cured product of the resin composition for forming a hard coating layer described above.

Furthermore, an embodiment of the present invention provides a molded product including a hard coating layer formed from a cured product of the resin composition for forming a hard coating layer described above.

### Advantageous Effects of Invention

Since the resin composition of an embodiment of the present invention has the composition described above, the resin composition can be used for forming a hard coating layer and can form, by irradiating it with an active energy ray, a hard coat layer that is transparent and has excellent visibility, a high surface hardness, and excellent scratch resistance and crack resistance, and that can suppress occurrence of cracks even in the case where thermal shock is applied and even in the case where the film thickness is increased.

Furthermore, since the resin composition of an embodiment of the present invention has low cure shrinkage and a small difference of coefficient of thermal expansion from that of a substrate, a hard coating layer having excellent curl resistance can be formed.

When the resin composition according to an embodiment of the present invention is used, a hard coating film, a molded product, and an electronic device that are provided with a hard coating layer having crack resistance, a high surface hardness, and excellent scratch resistance can be provided.

### Description of Embodiments

The resin composition according to an embodiment of the present invention contains the following components (A), (B), and (C) as curable compounds and further contains the following components (D) and (E) as polymerization initiators.
Component (A): a polyfunctional alicyclic epoxy compound having a molecular weight of less than 10000
Component (B): a polyfunctional (meth)acrylic compound having a molecular weight of less than 10000
Component (C): a linear polymer having, in a side chain thereof, a functional group that is reactive with a functional group of the component (A) and/or the component (B), and having a weight average molecular weight (in terms of polystyrene by GPC) of 10000 or greater
Component (D): a photocationic polymerization initiator
Component (E): a photoradical polymerization initiator

The resin composition according to an embodiment of the present invention can be used for forming a hard coating layer. That is, the resin composition according to an embodiment of the present invention may be a resin composition for forming a hard coating layer. Note that, in the present specification, "(meth)acrylic" means acrylic and/or methacrylic (acrylic or methacrylic or both), and the same applies to (meth)acrylate and (meth)acryloyl.

### Component (A)

The component (A) according to an embodiment of the present invention is a polyfunctional alicyclic epoxy compound. The polyfunctional alicyclic epoxy compound refers to a compound having an alicyclic structure and having two or more epoxy groups as functional groups in a molecule. Note that the epoxy group is one of cationically polymerizable groups.

The molecular weight of the polyfunctional alicyclic epoxy compound (in the case where the polyfunctional alicyclic epoxy compound is an oligomer or a polymer, the weight average molecular weight (in terms of polystyrene by GPC)) is less than 10000, preferably from 8000 to 100, more preferably from 7000 to 130, particularly preferably from 5000 to 150, even more preferably from 2000 to 150, most preferably from 1000 to 150, and particularly preferably from 500 to 150. When the resin composition according to an embodiment of the present invention is irradiated with an active energy ray, the component (B) immediately reacts, and thus a regular curl is formed immediately after the irradiation. The component (A) having the molecular weight described above reacts less rapidly compared to the component (B), but still relatively rapidly, and acts to form a reverse curl, and thus the curl can be made straight again. However, in the case where the molecular weight of the component (A) is greater than the range described above, since lower molecular mobility is exhibited and the curing reaction is delayed, the speed at which the curl is made straight again tends to be slow. On the other hand, when the molecular weight is less than the range described above, volatilization tends to occur during coating, and coatability tends to be decreased over time.

Specific examples of the polyfunctional alicyclic epoxy compound include
(i) a compound having an epoxy group formed from two adjacent carbon atoms and an oxygen atom constituting an alicyclic ring (alicyclic epoxy group),
(ii) a compound having an epoxy group directly bonded to an alicyclic ring through a single bond,
(iii) a compound having an alicyclic ring and a glycidyl group.

Examples of the compound (i) having an alicyclic epoxy group described above include compounds represented by Formula (a) below (alicyclic epoxy compounds).

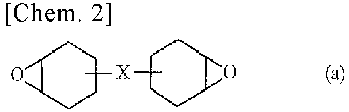

In Formula (a) above, X represents a single bond or a linking group (a divalent group having one or more atoms). Examples of the linking group include divalent hydrocarbon groups, alkenylene groups in which some or all of the carbon-carbon double bonds are epoxidized, carbonyl groups, ether bonds, ester bonds, carbonate groups, amide groups, and groups in which a plurality thereof are linked. Note that a substituent, such as an alkyl group (preferably an alkyl group having from 1 to 6 carbons, and more preferably an alkyl group having from 1 to 3 carbons), may be bonded to one or more of the carbon atoms constituting the cyclohexane rings (cyclohexene oxide groups) in Formula (a).

Examples of the divalent hydrocarbon group include linear or branched alkylene groups and divalent alicyclic hydrocarbon groups. Examples of the linear or branched alkylene group include linear or branched alkylene groups having from 1 to 18 carbons, such as a methylene group, a methyl methylene group, a dimethyl methylene group, an ethylene group, a propylene group, and a trimethylene group. Examples of the divalent alicyclic hydrocarbon group include cycloalkylene groups having from 3 to 18 carbons (including cycloalkylidene groups), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in the alkenylene group in which some or all of the carbon-carbon double bonds are epoxidized (which may be referred to as "epoxidized alkenylene group") include linear or branched alkenylene groups having from 2 to 8 carbons, such as a vinylene group, a propenylene group, a 1-butenylene group, a 2-butenylene group, a butadienylene group, a pentenylene group, a hexenylene group, a heptenylene group, and an octenylene group. In particular, the epoxidized alkenylene group is preferably an alkenylene group in which all of the carbon-carbon double bonds are epoxidized; and more preferably an alkenylene group having from 2 to 4 carbons in which all of the carbon-carbon double bonds are epoxidized.

Representative examples of the compound represented by Formula (a) above include (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, 1,2-bis(3,4-epoxycyclohexan-1-yl)ethane, and compounds represented by Formulas (a-1) to (a-10) below. L in Formula (a-5) below is an alkylene group having from 1 to 8 carbons, and among these, a linear or branched alkylene group having from 1 to 3 carbons, such as a methylene group, an ethylene group, a propylene group, or an isopropylene group, is preferred. In Formulas (a-5), (a-7), (a-9), and (a-10) below, n¹ to n⁸ each represent an integer from 1 to 30.

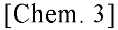

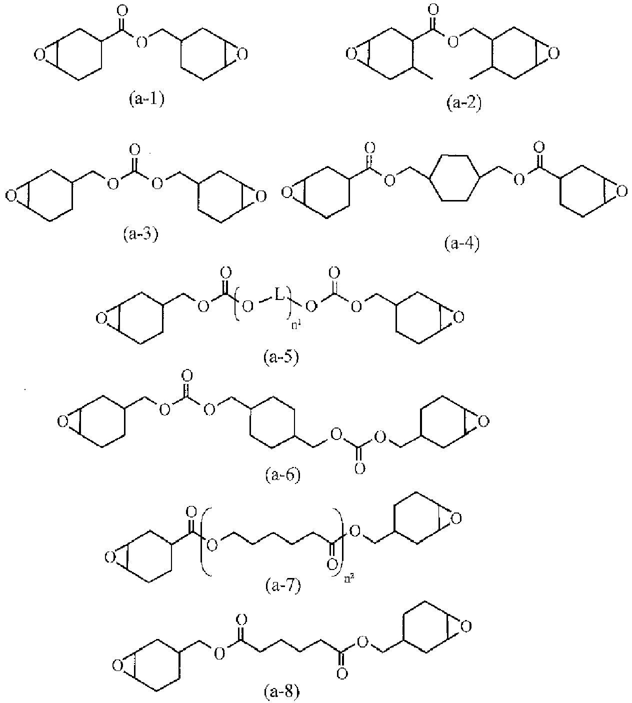

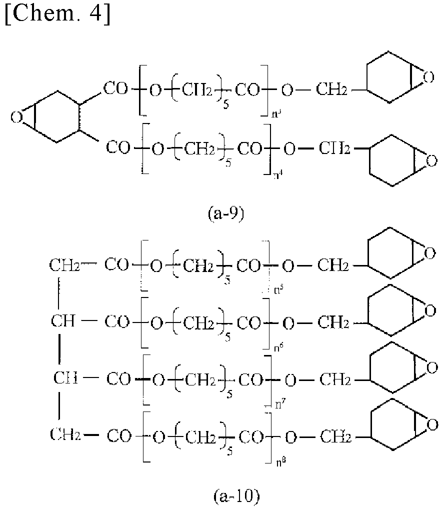

Examples of the compound (ii) having an epoxy group directly bonded to an alicyclic ring through a single bond described above include compounds represented by Formula (a') below.

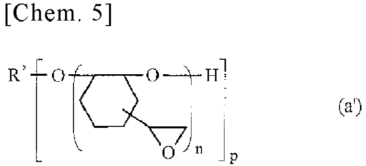

In Formula (a'), R' is a group resulting from elimination of p hydroxyl groups (-OH) from a structural formula of a p-valent alcohol (p-valent organic group), where p and n each represent a natural number. Examples of the p-valent alcohol [R'(OH)ₚ] include polyhydric alcohols (preferably, polyhydric alcohols having from 1 to 15 carbons), such as 2,2-bis(hydroxymethyl)-1-butanol. Here, p is preferably from 1 to 6, and n is preferably from 1 to 30. However, the case where p is 1 and n is 1 is excluded. When p is 2 or greater, n in each group in parentheses (in the outer parentheses) may be the same or different. Examples of the compound represented by Formula (a') specifically include 1,2-epoxy-4-(2-oxiranyl)cyclohexane adduct of 2,2-bis(hydroxymethyl)-1-butanol (for example, such as the trade name "EHPE3150" (available from Daicel Corporation)).

Examples of the compound (iii) having an alicyclic ring and a glycidyl group described above include hydrogenated bisphenol A epoxy compound, hydrogenated bisphenol F epoxy compound, hydrogenated biphenol epoxy compounds, hydrogenated phenol novolac epoxy compounds, hydrogenated cresol novolac epoxy compounds, hydrogenated cresol novolac epoxy compounds of bisphenol A, hydrogenated naphthalene epoxy compounds, and hydrogenated aromatic glycidyl ether epoxy compounds such as hydrogenated trisphenol methane epoxy compounds.

From the perspectives of obtaining a cured product having a high surface hardness, low curling tendency, and excellent transparency, the polyfunctional alicyclic epoxy compound is preferably the compound (i) having an alicyclic epoxy group, particularly preferably the compound represented by Formula (a) above. In particular, from the perspectives of achieving particularly excellent curability and obtaining a cured product having a high surface hardness even when the time required for post curing is shortened, a compound which is represented by Formula (a) above and in which X in the formula is a single bond or a linking group (a divalent hydrocarbon group, an alkenylene group in which all of the carbon-carbon double bonds are epoxidized, an ether bond, or a group in which two or more selected from these are linked) (note that an alkyl group may be bonded to one or more of the carbon atoms constituting the cyclohexane ring) is preferred.

### Component (B)

The component (B) according to an embodiment of the present invention is a polyfunctional (meth)acrylic compound. However, the compounds corresponding to the component (A) are excluded. The polyfunctional (meth)acrylic compound refers to a radically curable compound having two or more (meth)acryloyl groups as functional groups in a molecule.

The molecular weight of the polyfunctional (meth)acrylic compound (in the case where the polyfunctional (meth)acrylic compound is an oligomer or a polymer, the weight average molecular weight (in terms of polystyrene by GPC)) is less than 10000, preferably from 8000 to 100, more preferably from 5000 to 200, particularly preferably from 3000 to 250, most preferably from 1500 to 250, and particularly preferably from 1000 to 250. A molecular weight greater than the range described above tends to reduce surface hardness of the resulting cured product. On the other hand, an excessively low molecular weight may increase curling tendency of the resulting cured product.

The number (total number) of the acryloyl group and/or methacryloyl group in a molecule of the polyfunctional (meth)acrylic compound is 2 or greater, preferably 3 or greater, and particularly preferably 5 or greater. Note that the upper limit of the number is, for example, 15, preferably 12, and particularly preferably 10.

Examples of the polyfunctional (meth)acrylic compound include aliphatic (meth)acrylates, alicyclic (meth)acrylates, and aromatic (meth)acrylates. In an embodiment of the present invention, among these, an aliphatic (meth)acrylate (e.g., linear or branched aliphatic (meth)acrylate) is preferred from the perspective of non-coloring properties of the cured product.

Specific examples of the polyfunctional (meth)acrylic compound include bifunctional (meth)acrylates, such as 2-hydroxy-3-(meth)acryloyloxy propyl(meth)acrylate, tricyclodecane dimethanol di(meth)acrylate, glycerin di(meth)acrylate, ethylene glycol di(meth)acrylate, diethylene glycol di(meth)acrylate, triethylene glycol di(meth)acrylate, tetraethylene glycol di(meth)acrylate, propylene glycol di(meth)acrylate, dipropylene glycol di(meth)acrylate, neopentyl glycol di(meth)acrylate, 1,4-butanediol di(meth)acrylate, 1,6-hexanediol di(meth)acrylate, 1,9-nonanediol di(meth)acrylate, 1,10-decanediol di(meth)acrylate, 9,9-bis[4-(2-(meth)acryloyloxyethoxy)phenyl]fluorene, 2,2-bis[4-((meth)acryloyloxydiethoxy)phenyl]propane, and derivatives of these; tri- or higher-functional (meth)acrylates, such as ethoxylated isocyanuric acid tri(meth)acrylate, ε-caprolactone-modified tris(2-(meth)acryloyloxyethyl)isocyanurate, glycerin tri(meth)acrylate, ethoxylated glycerin tri(meth)acrylate, propoxylated glycerin tri(meth)acrylate, pentaerythritol tri(meth)acrylate, trimethylolpropane tri(meth)acrylate, tri(meth)acrylates of 3 mol ethylene oxide adducts of trimethylolpropane, tri(meth)acrylates of 3 mol propylene oxide adducts of trimethylolpropane, tri(meth)acrylates of 6 mol ethylene oxide adducts of trimethylolpropane, tri(meth)acrylates of 6 mol propylene oxide adducts of trimethylolpropane, ditrimethylol propane tetra(meth)acrylate, ethoxylated pentaerythritol tetra(meth)acrylate, pentaerythritol tetra(meth)acrylate, dipentaerythritol poly(meth)acrylate (e.g. dipentaerythritol hexa(meth)acrylate and hexa(meth)acrylates of caprolactone adducts of dipentaerythritol) and derivatives of these, polyester (meth)acrylate, polyether (meth)acrylate, acryl (meth)acrylate, urethane (meth)acrylate, epoxy (meth)acrylate, polyalkadiene (meth)acrylate (e.g. polybutadiene (meth)acrylate), melamine (meth)acrylate, and polyacetal (meth)acrylate.

### Component (C)

The component (C) according to an embodiment of the present invention is a linear polymer having a functional group in a side chain, the functional group being reactive with the functional group of the component (A) and/or the component (B), and having a weight average molecular weight (in terms of polystyrene) of 10000 or greater. Since the resin composition according to an embodiment of the present invention contains the component (C), formation of a crosslink structure is promoted and remaining of low molecular weight compounds is suppressed, and thus the cured product of the resin composition exhibits particularly excellent scratch resistance. Furthermore, since the resin composition according to an embodiment of the present invention contains the component (C) and the component (C) acts to make residual stress after the curing uniform, the resulting cured product has particularly excellent curl resistance and crack resistance. Note that, as a polymer, there are spherical polymers having dendrimer structures (including hyperbranched polymers) besides the linear polymer; however, use of such a spherical polymer in place of the component (C) is not preferred because curling tendency of the resulting cured product is increased.

The side chain of the linear polymer is preferably a group bonded to and dangled from the main chain, i.e., a pendant group.

Therefore, the linear polymer according to an embodiment of the present invention is preferably a linear polymer having a functional group that is reactive with functional groups of the component (A) and/or the component (B) as a pendant group, particularly preferably a linear acrylic polymer having a functional group that is reactive with functional groups of the component (A) and/or the component (B) as a pendant group, and is most preferably a linear acrylic polymer having one type or two or more types of constituent units represented by Formula (c) below. In Formula (c), R¹ represents a hydrogen atom or a methyl group. Furthermore, L represents a single bond or a linking group, and R² represents a functional group that is reactive with functional groups of the component (A) and/or the component (B).

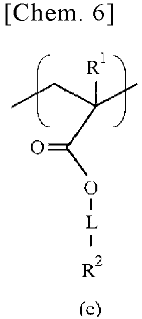

Examples of the linking group include divalent hydrocarbon groups, a carbonyl group (-CO-), an ether bond (-O-), a thioether bond (-S-), an ester bond (-COO-), an amide bond (-CONH-), a carbonate bond (-OCOO-), groups in which a plurality of these groups are linked, and the like. The linking group may have a substituent, such as a hydroxy group or a carboxyl group.

Examples of the divalent hydrocarbon group include linear or branched alkylene groups having from 1 to 10 carbons, such as a methylene group, a methylmethylene group, a dimethylmethylene group, an ethylene group, a propylene group, and a trimethylene group; linear or branched alkenylene groups having from 2 to 10 carbons, such as a vinylene group, a propenylene group, a 1-butenylene group, a 2-butenylene group, a butadienylene group, a pentenylene group, a hexenylene group, a heptenylene group, and an octenylene group; cycloalkylene groups having from 3 to 10 carbons (including cycloalkylidene groups), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group; and arylene groups having from 6 to 14 carbons, such as a phenylene group, a biphenylene group, and a naphthylene group.

Examples of the functional group that is reactive with the functional group of the component (A) (i.e. the epoxy group) in R² include 3- to 4-membered cyclic ether groups, such as an epoxy group and an oxetanyl group, and a hydroxy group. Note that the 3- to 4-membered cyclic ether group is a type of cationically polymerizable groups. Furthermore, examples of the functional group that is reactive with the functional group of the component (B) (i.e. the (meth)acryloyl group) in R² include radically polymerizable groups, such as (meth)acryloyl groups and vinyl ether groups.

Among these, as R² above, at least a functional group that is reactive with the functional group of the component (B) (i.e. the (meth)acryloyl group) is preferably contained, and at least a (meth)acryloyl group is particularly preferably contained.

R² above particularly preferably contains both a functional group that is reactive with the functional group of the component (A) (i.e. the epoxy group) and a functional group that is reactive with the functional group of the component (B) (i.e. the (meth)acryloyl group) from the perspectives of achieving particularly excellent curability, being capable of forming a highly dense crosslink structure even if the time required for post curing is shortened, and obtaining a cured product having significantly excellent scratch resistance and crack resistance. In particular, combined use of a (meth)acryloyl group and an epoxy group is preferred.

The component (C) is preferably a linear acrylic polymer having a (meth)acryloyl group as a pendant group or a linear acrylic polymer having both a (meth)acryloyl group and a cyclic ether group as pendant groups. In particular, from the perspectives of achieving particularly excellent curability and obtaining a cured product having particularly excellent scratch resistance even if the time required for post curing is shortened, the component (C) is most preferably a linear acrylic polymer having both a (meth)acryloyl group and a cyclic ether group as pendant groups.

As described above, the component (C) is preferably a linear polymer having a functional group that is at least reactive with the functional group of the component (B) in a side chain and having a weight average molecular weight of 10000 or greater, more preferably a linear polymer having a functional group that is reactive with the functional group of the component (A) and a functional group that is reactive with the functional group of the component (B) in a side chain and having a weight average molecular weight of 10000 or greater, particularly preferably a linear acrylic polymer having a functional group that is reactive with the functional group of the component (A) and a functional group that is reactive with the functional group of the component (B) in a side chain and having a weight average molecular weight of 10000 or greater, most preferably a linear acrylic polymer having a (meth)acryloyl group and a cyclic ether group in a side chain and having a weight average molecular weight of 10000 or greater, and particularly preferably a linear acrylic polymer having a (meth)acryloyl group and a cyclic ether group as pendant groups and having a weight average molecular weight of 10000 or greater.

The weight average molecular weight (in terms of polystyrene by GPC) of the component (C) is 10000 or greater, and from the perspective of obtaining a cured product having superior crack resistance, preferably from 500000 to 10000, more preferably from 300000 to 10000, particularly preferably from 150000 to 10000, and most preferably from 100000 to 10000.

The functional group equivalent (in the case where two or more types of functional groups are contained, a total equivalent thereof) of the component (C) is, for example, preferably from 5000 to 100 g/mol, more preferably from 3000 to 120 g/mol, particularly preferably from 2000 to 150 g/mol, most preferably from 1200 to 300 g/mol, and particularly preferably from 900 to 300 g/mol, from the perspectives of achieving particularly excellent curability and obtaining a cured product having excellent scratch resistance even if the time required for post curing is shortened.

The double bond equivalent (or the (meth)acryloyl group equivalent) of the component (C) is, for example, preferably from 5000 to 100 g/mol, more preferably from 3000 to 120 g/mol, particularly preferably from 2000 to 150 g/mol, most preferably from 1500 to 200 g/mol, and particularly preferably from 1200 to 200 g/mol, from the perspectives of obtaining a cured product having particularly excellent scratch resistance. Furthermore, in the case where the component (C) contains a (meth)acryloyl group as a pendant group and contains no cyclic ether group, the double bond equivalent (or the (meth)acryloyl group equivalent) of the component (C) is, in particular, preferably from 1000 to 100 g/mol, more preferably from 800 to 120 g/mol, particularly preferably from 500 to 150 g/mol, and most preferably from 400 to 200 g/mol. On the other hand, in the case where the component (C) contains both a (meth)acryloyl group and a cyclic ether group as pendant groups, the double bond equivalent (or the (meth)acryloyl group equivalent) of the component (C) is, in particular, preferably from 2000 to 300 g/mol, more preferably from 1500 to 400 g/mol, particularly preferably from 1000 to 500 g/mol, and most preferably from 1000 to 600 g/mol.

The cyclic ether group equivalent of the component (C) is, for example, preferably from 10000 to 200 g/mol, more preferably from 5000 to 300 g/mol, particularly preferably from 3000 to 500 g/mol, most preferably from 2500 to 1000 g/mol, and particularly preferably from 2000 to 1200 g/mol, from the perspectives of achieving particularly excellent curability and shortening the time required for post curing.

The linear acrylic polymer having a (meth)acryloyl group as a pendant group can be produced by, for example, radically polymerizing a monomer having a (meth)acryloyl group and a glycidyl ether group in a molecule to obtain a linear acrylic polymer having a glycidyl ether group as a pendant group and then by reacting (meth)acrylic acid with the glycidyl ether group as the pendant group of the obtained linear acrylic polymer.

As the component (C), for example, commercially available products, such as trade names "VANARESIN KV-2211" and "VANARESIN GH-1203" (available from Shin Nakamura Chemical Co., Ltd.) and trade names "Hitaloid 7975" and "Hitaloid 7988" (available from Hitachi Chemical Company, Ltd.), can be suitably used.

### Component (D)

The component (D) according to an embodiment of the present invention is a photocationic polymerization initiator. The photocationic polymerization initiator is a compound that initiates curing reaction of the cationically polymerizable group in the resin composition by generating an acid when irradiated with light and is formed from a cation moiety that absorbs light and an anion moiety that serves as a source of generation of the acid.

Examples of the photocationic polymerization initiator include diazonium salt-based compounds, iodonium salt-based compounds, sulfonium salt-based compounds, phosphonium salt-based compounds, selenium salt-based compounds, oxonium salt-based compounds, ammonium salt-based compounds, and bromine salt-based compounds.

In the present invention, among these, use of a sulfonium salt-based compound is preferred because a cured product having excellent curability can be formed. Examples of the cation moiety of the sulfonium salt-based compound include arylsulfonium ions (especially, triarylsulfonium ions), such as a (4-hydroxyphenyl)methylbenzylsulfonium ion, a triphenyl sulfonium ion, a diphenyl[4-(phenylthio)phenyl]sulfonium ion, a 4-(4-biphenylthio)phenyl-4-biphenylylphenylsulfonium ion, and a tri-p-tolylsulfonium ion.

Examples of the anion moiety of the photocationic polymerization initiator include [(Y)ₛB(Phf)₄₋ₛ]⁻ (in the formula, Y represents a phenyl group or a biphenylyl group, Phf represents a phenyl group in which at least one hydrogen atom is replaced with at least one type selected from the group consisting of a perfluoroalkyl group, a perfluoroalkoxy group, and a halogen atom, and s is an integer of 0 to 3.), BF₄⁻, [(Rf)ₜPF₆-t]⁻ (in the formula, Rf represents an alkyl group in which 80% or more of hydrogen atoms are replaced with fluorine atoms, and t represents an integer of 0 to 5.), AsF₆⁻; SbF₆⁻; SbFₛOH⁻.

Commercially available products can be used as photocationic polymerization initiators in an embodiment of the present invention. Examples thereof include (4-hydroxyphenyl)methylbenzylsulfonium tetrakis(pentafluorophenyl)borate; 4-(4-biphenylylthio)phenyl-4-biphenylylphenylsulfonium tetrakis(pentafluorophenyl)borate; 4-(phenylthio)phenyldiphenylsulfonium phenyltris(pentafluorophenyl)borate; [4-(4-biphenylylthio)phenyl]-4-biphenylylphenylsulfonium phenyltris(pentafluorophenyl)borate; diphenyl[4-(phenylthio)phenyl]sulfonium tris(pentafluoroethyl)trifluorophosphate; diphenyl[4-(phenylthio)phenyl]sulfonium tetrakis(pentafluorophenyl)borate; diphenyl[4-(phenylthio)phenyl]sulfonium hexafluorophosphate; 4-(4-biphenylylthio)phenyl-4-biphenylylphenylsulfonium tris(pentafluoroethyl)trifluorophosphate; bis[4-(diphenylsulfonio)phenyl]sulfide phenyltris(pentafluorophenyl)borate; [4-(2-thioxanthonylthio)phenyl]phenyl-2-thioxanthonylsulfonium phenyltris(pentafluorophenyl)borate; 4-(phenylthio)phenyldiphenylsulfonium hexafluoroantimonate; the trade names "Cyracure UVI-6970", "Cyracure UVI-6974", "Cyracure UVI-6990", and "Cyracure UVI-950" (the above available from Union Carbide Corporation, USA); "Irgacure250", "Irgacure261", and "Irgacure264" (the above available from BASF Corporation); "CG-24-61" (available from Ciba-Geigy Corporation); "Optomer SP-150", "Optomer SP-151", "Optomer SP-170", and "Optomer SP-171" (the above available from ADEKA Corporation); "DAICAT II" (available from Daicel Corporation); "UVAC1590" and "UVAC1591" (the above available from Daicel-Cytec Co., Ltd.); "CI-2064", "CI-2639", "CI-2624", "CI-2481", "CI-2734", "CI-2855", "CI-2823", "CI-2758", and "CIT-1682" (the above available from Nippon Soda Co., Ltd.); "PI-2074" (tetrakis(pentafluorophenyl)borate tolylcumyliodonium salt, available from Rhodia Japan Ltd.); "FFC509" (available from 3M Company); "BBI-102", "BBI-101", "BBI-103", "MPI-103", "TPS-103", "MDS-103", "DTS-103", "NAT-103", and "NDS-103" (the above available from Midori Kagaku Co., Ltd.); "CD-1010", "CD-1011", and "CD-1012" (the above available from Sartomer Co., Ltd., USA); and"CPI-100P" and "CPI-101A" (the above available from San-Apro Ltd.).

### Component (E)

The component (E) according to an embodiment of the present invention is a photoradical polymerization initiator. The photoradical polymerization initiator is a compound that initiates curing reaction of the radically polymerizable group of the resin composition by generating a radical when irradiated with light, and examples thereof include benzophenone, acetophenone benzyl, benzyldimethyl ketone, benzoin, benzoin methyl ether, benzoin ethyl ether, benzoin isopropyl ether, dimethoxyacetophenone, dimethoxy phenylacetophenone, diethoxyacetophenone, diphenyl disulfite, methyl o-benzoylbenzoate, ethyl 4-dimethylaminobenzoate (available from Nippon Kayaku Co., Ltd.; trade name "Kayacure EPA" and the like), 2,4-diethylthioxanthone (available from Nippon Kayaku Co., Ltd., trade name "Kayacure DETX" and the like), 2-methyl-1-[4-(methyl)phenyl]-2-morpholino-propanone-1 (available from BASF, trade name "Irgacure 907" and the like), 1-hydroxycyclohexyl phenyl ketone (available from BASF, trade name "Irgacure 184" and the like), 2-dimethylamino-2-(4-morpholino)benzoyl-1-phenylpropane, and other such 2-amino-2-benzoyl-1-phenyl alkane compounds, tetra(t-butylperoxy carbonyl) benzophenone, benzil, 2-hydroxy-2-methyl-1-phenyl-propan-1-one, 4,4'-bis(diethylamino)benzophenone, and other such amino benzene derivatives, 2,2'-bis(2-chlorophenyl)-4,5,4',5'-tetraphenyl-1,2'-biimidazole (available from Hodagaya Chemical Co., Ltd., trade name "B-CIM" and the like), and other such imidazole compounds, 2,6-bis(trichloromethyl)-4-(4-methoxynaphthalen-1-yl)-1,3,5-triazine, and other such halomethylated triazine compounds, 2-trichloromethyl-5-(2-benzofuran-2-yl-ethenyl)-1,3,4-oxadiazole, and other such halomethyl oxadiazole compounds.

### Other components

Besides the components described above, the resin composition according to an embodiment of the present invention may contain other component(s) within a range that does not impair the effects of the present invention. For example, another curable compound besides the components (A), (B), and (C) may be contained. Furthermore, various additives besides the components (D) and (E) may be contained. Examples of the additives include polyhydric alcohols, curing auxiliary agents, organosiloxane compounds, metal oxide particles, rubber particles, defoaming agents, silane coupling agents, fillers, plasticizers, leveling agents, antistatic agents, releasing agents, surfactants, flame retardants, colorants, antioxidants, ultraviolet absorbing agents, ion adsorbing body, and fluorescent materials. The content of the additives can be appropriately set depending on the use, and for example, the content is 40 wt.% or less, preferably 25 wt.% or less, particularly preferably 20 wt.% or less, and most preferably 10 wt.% or less, per 100 wt.% of the resin composition according to an embodiment of the present invention.

Furthermore, to the resin composition according to an embodiment of the present invention, a solvent can be appropriately added depending on coating conditions. Examples of the solvent include butyl acetate, methyl ethyl ketone, and 1-methoxy-2-propyl acetate. One type alone or two or more types thereof in combination can be used.

The resin composition according to an embodiment of the present invention can be prepared by agitating and mixing the components described above, if necessary, in a condition where the components are heated. For the agitation and mixing, for example, well-known or commonly used agitation and mixing means, such as various mixers including dissolvers, homogenizers, and the like, kneaders, rolls, bead mills, and rotation/revolution agitation apparatus, can be used. Furthermore, after the agitation and mixing, defoaming may be performed under vacuum. Note that the resin composition according to an embodiment of the present invention may be a one-part composition which is used as is and in which the components have been mixed in advance, or may be a multi-part (e.g. two-part) composition which is used by mixing two or more separated components (each of the components may be a mixture of two or more components) in predetermined proportions before the use.

The resin composition according to an embodiment of the present invention contains one type or two or more types of polyfunctional ali cyclic epoxy compounds as the component (A). The content of the component (A) is, for example, from 3 to 40 wt.% relative to the total amount of the curable compounds contained in the resin composition according to an embodiment of the present invention. The upper limit thereof is preferably 30 wt.%, particularly preferably 20 wt.%, and most preferably 15 wt.%. The lower limit is preferably 5 wt.%.

The resin composition according to an embodiment of the present invention contains one type or two or more types of polyfunctional (meth)acrylic compounds as the component (B). The content of the component (B) is, for example, from 50 to 90 wt.% relative to the total amount of the curable compounds contained in the resin composition according to an embodiment of the present invention. The upper limit thereof is preferably 85 wt.%. The lower limit is preferably 35 wt.%, more preferably 40 wt.%, particularly preferably 45 wt.%, most preferably 55 wt.%, and particularly preferably 65 wt.%.

The total content of the component (A) and the component (B) is, for example, from 60 to 98 wt.% relative to the total amount of the curable compounds contained in the resin composition according to an embodiment of the present invention. The upper limit thereof is preferably 95 wt.%. The lower limit is preferably 70 wt.%, more preferably 75 wt.%, particularly preferably 80 wt.%, most preferably 85 wt.%, and particularly preferably 90 wt.%.

Furthermore, the ratio of the content of the component (A) to the content of the component (B) (component (A)/component (B); weight ratio) is, for example, from 3/97 to 30/70. The upper limit thereof is preferably 25/75, particularly preferably 20/80, and most preferably 15/85. Furthermore, the lower limit is preferably 5/95, and particularly preferably 10/90.

By controlling the contents of the components (A) and (B) to the range described above, effect of reducing curling tendency can be achieved while scratch resistance is maintained. If the contents of the components (A) and (B) are not within the range described above, an excessive content of the component (A) exhibits reverse curling tendency, and an excessive content of the component (B) exhibits regular curling tendency. It becomes thus difficult to obtain a cured product with low curling tendency.

The resin composition according to an embodiment of the present invention contains one type or two or more types of the linear polymers as the component (C). The content of the component (C) is, for example, from 2 to 50 parts by weight per 100 parts by weight total of the component (A) and the component (B) contained in the resin composition according to an embodiment of the present invention. The upper limit thereof is preferably 35 parts by weight, particularly preferably 25 parts by weight, most preferably 15 parts by weight, and particularly preferably 10 parts by weight. The lower limit is preferably 3 parts by weight, particularly preferably 4 parts by weight, and most preferably 5 parts by weight.

Blending of the component (C) in the range described above is preferred from the perspective of obtaining a cured product having all of scratch resistance, crack resistance, a high surface hardness, curl resistance, and transparency. In a case where the content of the component (C) is not in the range described above, scratch resistance tends to be deteriorated. Furthermore, in a case where the content of the component (C) is less than the range described above, crack resistance tends to be deteriorated. On the other hand, in a case where the content of the component (C) is greater than the range described above, surface hardness tends to be deteriorated.

Furthermore, the resin composition according to an embodiment of the present invention may contain another curable compound besides the components (A), (B), and (C); however, the proportion of the total content of the component (A), the component (B), and the component (C) relative to the total amount of the curable compounds contained in the resin composition according to an embodiment of the present invention is, for example, 60 wt.% or greater, preferably 70 wt.% or greater, particularly preferably 80 wt.% or greater, and most preferably 90 wt.% or greater. Note that the upper limit is 100 wt.%. If the proportion of the total content of the component (A), the component (B), and the component (C) is below the range described above, it tends to be difficult to obtain a cured product having all the low curling tendency, the high surface hardness, and the excellent scratch resistance. In particular, from the perspective of low curling tendency, the content of a spherical polymer (particularly, spherical acrylic polymer) as a curable compound is, for example, preferably 5 wt.% or less, more preferably 3 wt.% or less, and particularly preferably 1 wt.% or less, relative to the total amount of the curable compounds.

The resin composition according to an embodiment of the present invention contains one type or two or more types of photocationic polymerization initiators as the component (D). The content of the component (D) is, for example, from 0.05 to 5 parts by weight per 100 parts by weight of the curable compounds contained in the resin composition according to an embodiment of the present invention. If the content of the component (D) is less than the range described above, failure in curing may occur. On the other hand, in a case where the content of the component (D) is greater than the range described above, a cured product tends to be colored.

The resin composition according to an embodiment of the present invention contains one type or two or more types of photoradical polymerization initiators as the component (E). The content of the component (E) is, for example, from 1 to 10 parts by weight per 100 parts by weight of the curable compounds contained in the resin composition according to an embodiment of the present invention. In a case where the content of the component (E) is less than the range described above, failure in curing may occur. On the other hand, if the content of the component (E) is greater than the range described above, a cured product tends to be colored.

The resin composition according to an embodiment of the present invention can be cured in a significantly short period of time by irradiation with an active energy ray, such as an ultraviolet ray or an electron beam, after the coating, and a cured product having low curling tendency, excellent surface hardness and scratch resistance can be obtained. As the light source during the ultraviolet ray irradiation, a high-pressure mercury-vapor lamp, an ultrahigh-pressure mercury-vapor lamp, a carbon-arc lamp, a xenon lamp, a metal halide lamp, or the like is used. The irradiation time varies depending on the type of the light source, the distance between the light source and the coated surface, and other conditions, and the irradiation time is at most several tens of seconds, and typically a several seconds. Typically, an irradiation source with a lamp output of approximately from 80 to 300 W/cm is used. The UV irradiation dose is approximately from 50 to 3000 mJ/cm². In the case of electron beam irradiation, an electron beam having energy in a range from 50 to 1000 KeV is used, and the irradiation dose from 2 to 5 Mrad is preferably employed. After the irradiation with the active energy ray, as necessary, heating (post curing) may be performed to promote the curing.

The cured product of the resin composition according to an embodiment of the present invention has excellent scratch resistance. The number of times of rubbing withstood until a scratch is made in a test using a steel wool described in Examples is, for example, 300 times or greater, preferably 500 times or greater, and particularly preferably 1000 times or greater.

The cured product of the resin composition according to an embodiment of the present invention has excellent crack resistance, and generation of crack can be suppressed even when the cured product is subjected to thermal shock.

The cured product of the resin composition according to an embodiment of the present invention has a high surface hardness, and a pencil hardness is, for example, 2H or higher.

The cured product of the resin composition according to an embodiment of the present invention has excellent transparency, and a light transmittance (based on the thickness of 20 µm) of a light having a wavelength of 450 nm is, for example, 80% or greater. Note that, for example, the light transmittance can be measured by using a spectrophotometer (e.g. trade name "UV-2400", available from Shimadzu Corporation).

### Hard coating film

At least a part of the hard coating film according to an embodiment of the present invention has one or two or more hard coating layers formed from the cured product of the resin composition described above.

The hard coating film according to an embodiment of the present invention is preferably a laminate having at least one substrate layer and at least one hard coating layer. As a substrate constituting the substrate layer, plastic films, such as TAC (triacetyl cellulose) and PET (polyethylene terephthalate), can be suitably used.

The hard coating film according to an embodiment of the present invention can be produced by, for example, applying the resin composition according to an embodiment of the present invention on at least one face of a substrate and curing the resin composition.

The thickness of the hard coating layer (cured product of the resin composition) is, for example, approximately from 3 to 50 µm. Furthermore, the thickness of the entire hard coating film is, for example, approximately from 30 to 300 µm.

The hard coating film according to an embodiment of the present invention has low curling tendency. According to the curling tendency measurement method described in Examples, the warpage amount is, for example, -2.0 mm or greater but 2.0 mm or less, preferably -1.5 mm or greater but 1.5 mm or less, and particularly preferably -1.0 mm or greater but 1.0 mm or less.

The hard coating film according to an embodiment of the present invention has low curling tendency, is easily adhered, and has a high surface hardness, excellent scratch resistance, and crack resistance. Therefore, the hard coating film can be suitably used for adhering it on and protecting touch screens and displays of electronic devices, such as liquid crystal televisions, liquid crystal displays, notebook-size personal computers, mobile displays, tablet computers, and smartphones. That is, the hard coating film according to an embodiment of the present invention can be suitably used as a protective film for touch screens and displays of the electronic devices.

### Electronic device

In the electronic device according to an embodiment of the present invention, at least a part of a surface of the electronic device has a hard coating layer formed from the cured product of the resin composition described above.

Examples of the electronic device according to an embodiment of the present invention include liquid crystal televisions, liquid crystal displays, notebook-size personal computers, mobile displays, tablet computers, and smartphones.

The electronic device according to an embodiment of the present invention can be produced by, for example, directly applying the resin composition on a surface of the electronic device and curing the resin composition, or by adhering the hard coating film described above on a surface of the electronic device.

The electronic device according to an embodiment of the present invention has a structure in which a touch screen or a display is protected by a hard coating layer formed from a cured product of the resin composition and having an excellent surface hardness and excellent scratch resistance. Thus, the electronic device is less likely to be scratched or contaminated and can maintain high quality for a long period of time.

### Molded product

In the molded product according to an embodiment of the present invention, at least a part of the molded product surface is provided with a hard coating layer formed from a cured product of the resin composition described above.

Examples of the molded product according to an embodiment of the present invention include lenses, sensors, glass-alternative resins (or resin windows), and automobile components (e.g., interior components such as gauge panels, exterior components such as door handles and roof rails, and electrical components such as headlamp lenses).

The molded product according to an embodiment of the present invention can be produced by, for example, directly applying the resin composition on a surface of the molded product and curing the resin composition, or by adhering the hard coating film described above on a surface of the molded product.

The molded product according to an embodiment of the present invention has a hard coating layer formed from a cured product of the resin composition and having an excellent surface hardness and excellent scratch resistance. Thus, the molded product is less likely to be scratched or contaminated and can maintain high quality for a long period of time.

### Example(s)

Hereinafter, the present invention is described in more detail based on examples, but the present invention is not limited by these examples.

### Preparation Example 1 [Preparation of (3,4,3',4'-diepoxy)bicyclohexyl]

A dehydration catalyst was prepared by mixing 70 g (0.68 mol) of 95 wt.% sulfuric acid and 55 g (0.36 mol) of 1,8-diazabicyclo[5.4.0]undecene-7 (DBU) under stirring.

A 3-L flask equipped with a stirrer, a thermometer, and a distillation pipe that was filled with a dehydrating agent and heat insulated was charged with 1000 g (5.05 mol) of a hydrogenated biphenol (= 4,4'-dihydroxybicyclohexyl), 125 g (0.68 mol in terms of sulfuric acid) of the dehydration catalyst prepared above, and 1500 g of pseudocumene, and the flask was heated. Generation of water was confirmed at about when the internal temperature exceeded 115°C. The temperature was further continuously raised to the boiling point of pseudocumene (internal temperature from 162 to 170°C) to perform a dehydration reaction at normal pressure. The by-produced water was distilled off and discharged out of the system through a discharge pipe. Here, the dehydration catalyst was liquid under the reaction conditions and was finely dispersed in the reaction liquid. After 3 hours, almost the theoretical amount of water (180 g) was distilled off, and thus the reaction was completed.

After completion of the reaction, pseudocumene was distilled off from the liquid in the reactor using a 10-stage Oldershaw-type distillation column, and then distilled at an internal pressure of 10 Torr (1.33 kPa) and an internal temperature from 137 to 140°C to obtain 731 g of bicyclohexyl-3,3'-diene.

243 g of the resulting bicyclohexyl-3,3'-diene and 730 g of ethyl acetate were charged in a reactor, and 274 g of a solution of 30 wt.% peracetic acid in ethyl acetate (moisture percentage of 0.41 wt.%) was added dropwise over about 3 hours while purging nitrogen into the gas phase portion and controlling the temperature in the reaction system to 37.5°C. After completion of the dropwise addition, the mixture was aged at 40°C for 1 hour, and then the reaction was completed. Furthermore, the crude liquid at the end of the reaction was washed with water at 30°C, and low-boiling point compounds were removed at 70°C/20 mmHg to obtain 270 g of a compound. The oxirane oxygen concentration of the resulting compound was 15.0 wt.%. In addition, in the ¹H-NMR measurement, the peak originating from the internal double bond at or near δ4.5 to 5 ppm disappeared, confirming the generation of the proton peak originating from an epoxy group at or near δ3.1 ppm. From the above, the resulting compound was confirmed to be (3,4,3',4'-diepoxy)bicyclohexyl.

### Example 1

### Preparation of resin composition

The components were blended in the blending proportions (in part by weight) shown in the following tables, agitated by using a rotation/revolution agitation apparatus (trade name "THINKY MIXER AR-250", available from Thinky Corporation) and defoamed to obtain a resin composition. Note that the blended amount of the component (C) in the tables is a total amount of the linear polymer (solid content) and the solvent, and the numerical value in parentheses shows the blended amount of the linear polymer (solid content).

### Preparation of hard coating film

The obtained resin composition was applied on a 10 cm square polycarbonate substrate (trade name "PS610", available from C.I. Takiron Corporation; thickness: 2 mm) to form a coating film by using a bar coater in a manner that the film thickness after drying became 20 µm.

Thereafter, the coating film was dried at 80°C for 1 minute, and then the coating film was irradiated with an ultraviolet ray (irradiation dose: 1000 mJ/cm²) in a condition where the coating film is placed in an airtight container purged with nitrogen, and a transparent coating film (transmittance of light at a wavelength of 450 nm: 91%) was formed by further performing post curing (heating at 80°C for 6 hours). The laminate (hard coating film (1)) having a structure of "PC substrate/cured product (cured coating film)" obtained as described above was used as samples for pencil hardness evaluation and scratch resistance evaluation.

In the case where the hard coating film (1) was placed on a horizontal surface, the average value of the warpage amounts of the four corners was 0.8 mm. From this, it was found that the resin composition exhibited low cure shrinkage and achieved excellent curl resistance.

Furthermore, a laminate (hard coating film (2)) having a structure of "PC substrate/cured product (cured coating film)" obtained in the same manner as described above except for changing the thickness of the polycarbonate substrate to 5 mm and changing the film thickness of the coating film from 20 µm to 40 µm was used as a sample for crack resistance evaluation.

### Examples 2 to 8 and Comparative Examples 1 to 6

Each resin composition was obtained in the same manner as described in Example 1 except for changing the blended amount of the components and post cure conditions as described in the following tables, and samples for pencil hardness evaluation and scratch resistance evaluation and a sample for crack resistance evaluation were obtained. Note that post curing was not performed for Comparative Examples 5 and 6.

### Pencil hardness

The evaluation of the pencil hardness was performed in accordance with JIS K 5600.

Specifically, first, the cured coating film surface of the sample for pencil hardness evaluation was scratched by a pencil with a certain hardness, and in the case where no scratch was made, scratching was repeated with a pencil with a hardness that was one grade harder. When it was confirmed that a scratch was made, scratching was performed again with a pencil with a hardness that was one grade less hard, and it was checked in a case where a scratch was made or not. Once it was confirmed that no scratch was made, it was checked again in a case where a scratch was made or not by using a pencil with a hardness that was one grade harder. In the case where reproducibility (two or more times) was confirmed, the hardness of the pencil that was the hardest and that did not make scratches was taken as the pencil hardness of the sample, and the evaluation result was shown in terms of the hardness of the pencil lead. The evaluation conditions are as follows.
Pencil for evaluation: "pencil for pencil hardness test", available from Mitsubishi Pencil Co., Ltd.
Load: 750 gf
Scratch distance: 50 mm or greater
Scratch angle: 45°
Measurement environment: 23°C, 50%RH

Note that the sample (hard coating film) used for the test was a sample whose moisture was adjusted for 24 hours in a constant temperature and humidity chamber at 23°C and 50%RH.

### Scratch resistance

The coating film surface of the sample for scratch resistance evaluation was rubbed by #0000 steel wool at a load of 500 g/cm², and scratch resistance was evaluated based on the number of rubbing until a scratch was formed.

### Crack resistance

The sample for crack resistance evaluation was subjected to 200 cycles of thermal shock, where one cycle includes exposure to an atmosphere at -40°C for 30 minutes and then exposure to an atmosphere at 100°C for 30 minutes, by using a thermal shock tester. Thereafter, presence or absence of cracks on the coating film surface of the sample was observed by using a digital microscope (trade name "VHX-900", available from Keyence Corporation), and the crack resistance was evaluated based on the following criteria.
Good: No cracks observed
Poor: Cracks observed

**[Table 1]**

| | | Example 1 | Example 2 | Example 3 | Example 4 | Example 5 | Example 6 | Example 7 | Example 8 |
|---|---|---|---|---|---|---|---|---|---|
| A | Celloxide 2021P | 10 | - | - | - | - | - | - | - |
| | (3,4,3',4'-Diepoxy)bicyclohexyl | - | 10 | - | 15 | 10 | 10 | 10 | 10 |
| | NANOPOX C620 | - | - | 10 | - | - | - | - | - |
| B | PETIA | 90 | 90 | 90 | - | 90 | 90 | 90 | 90 |
| | A-9550 | - | - | - | 85 | - | - | - | - |
| C | VANARESIN KV-2211 | 23.32 (8.0) | 23.32 (8.0) | 23.32 (8.0) | 23.32 (8.0) | - | - | - | - |
| | VANARESIN GH-1203 | - | - | - | - | 21.16 (8.0) | | - | - |
| | Hitaloid 7975 | - | - | - | - | - | 25 (8.0) | - | - |
| | Hitaloid 7988 | - | - | - | - | - | - | 24.24 (8.0) | - |
| | IRR742 | - | - | - | - | - | - | - | 14.45 (8.0) |
| D | CPI-210S | 0.2 | 0.2 | 0.2 | 0.2 | 0.2 | 0.2 | 0.2 | 0.2 |
| E | Irgacure 184 | 4 | 4 | 4 | 4 | 4 | 4 | 4 | 4 |
| Solvent | Butyl acetate | 14.68 | 14.68 | 14.68 | 14.68 | 16.84 | 13 | 13.76 | 23.55 |
| | MMPGAC | - | - | - | - | - | - | - | - |
| UV irradiation dose (mJ/cm²) | | 1000 | 1000 | 1000 | 1000 | 1000 | 1000 | 1000 | 1000 |
| Post cure temperature × time | | 80°C × 6 hours | 80°C × 1 hour | 80°C × 6 hours | 80°C × 1 hour | 80°C × 2 hours | 80°C × 2 hours | 80°C × 2 hours | 80°C × 2 hours |
| Pencil hardness | | 2H | 2H | 2H | 2H | 2H | 2H | 2H | 2H |
| Scratch resistance | | 3000 times | 3000 times | 3000 times | 3000 times | 2000 times | 3000 times | 5000 times | 2000 times |
| Crack resistance | | Good | Good | Good | Good | Good | Good | Good | Good |

**[Table 2]**

| | | Comparative Example 1 | Comparative Example 2 | Comparative Example 3 | Comparative Example 4 | Comparative Example 5 | Comparative Example 6 |
|---|---|---|---|---|---|---|---|
| A | Celloxide 2021P | 10 | - | - | - | - | - |
| | (3,4,3',4'-Diepoxy)bicyclohexyl | - | 10 | - | 15 | - | - |
| | NANOPOX C620 | - | - | 10 | - | - | - |
| B | PETIA | 90 | 90 | 90 | | 100 | |
| | A-9550 | - | - | - | 85 | | 100 |
| C | VANARESIN KV-2211 | - | - | - | - | - | - |
| | VANARESIN GH-1203 | - | - | - | - | - | - |
| | Hitaloid 7975 | - | - | - | - | - | - |
| | Hitaloid 7988 | - | - | - | - | - | - |
| | IRR742 | - | - | - | - | - | - |
| D | CPI-210S | 0.2 | 0.2 | 0.2 | 0.2 | - | - |
| E | Irgacure 184 | 4 | 4 | 4 | 4 | 4 | 4 |
| Solvent | Butyl acetate | - | - | - | - | - | - |
| | MMPGAC | 30 | 30 | 30 | 120 | 30 | 30 |
| UV irradiation dose (mJ/cm²) | | 1000 | 1000 | 1000 | 1000 | 1000 | 1000 |
| Post cure temperature × time | | 80°C × 6 hours | 80°C × 2 hours | 80°C × 6 hours | 80°C × 6 hours | - | - |
| Pencil hardness | | 2H | 2H | 2H | 2H | 2H | 3H |
| Scratch resistance | | 600 times | 700 times | 600 times | 700 times | 6000 times | 10000 times or greater |
| Crack resistance | | Poor | Poor | Poor | Poor | Poor | Poor |

Abbreviations in the tables are described below.
A
   - Celloxide 2021P: 3,4-epoxycyclohexylmethyl(3,4-epoxy)cyclohexanecarboxylate; molecular weight: 252; trade name "Celloxide 2021P", available from Daicel Corporation
   - (3,4,3',4'-Diepoxy)bicyclohexyl: molecular weight: 194; (3,4,3',4'-diepoxy)bicyclohexyl obtained in Preparative Example was used.
   - NANOPOX C620: a compound obtained by reacting a hydroxy group-containing silica (silica average particle diameter: 10 nm) (40 parts by weight) with Celloxide 2021P (60 parts by weight); trade name "NANOPOX C620", available from Evonic
B
   - PETIA: pentaerythritol (tri/tetra)acrylate; molecular weight: 298/352; available from Daicel-Allnex Ltd.
   - A-9550: dipentaerythritol polyacrylate; weight average molecular weight: approximately 554; available from Shin Nakamura Chemical Co., Ltd.
C
   - VANARESIN KV-2211: a linear acrylic polymer having a methacryloyl group and a glycidyl ether group as pendant groups; solid content concentration: 34.3%; solvent: MMPGAC; weight average molecular weight: 11000; functional group equivalent (double bond + epoxy group): 570 g/mol; double bond equivalent: 845 g/mol; epoxy equivalent: 1740 g/mol; available from Shin Nakamura Chemical Co., Ltd.
   - VANARESIN GH-1203: a linear acrylic polymer having a methacryloyl group as a pendant group; solid content concentration: 37.8%; solvent: MIBK; weight average molecular weight: 14000; double bond equivalent: 218 g/mol; available from Shin Nakamura Chemical Co., Ltd.
   - Hitaloid 7975: a linear acrylic polymer having an acryloyl group as a pendant group; weight average molecular weight: 78000; solid content concentration: 32.0%; solvent: 34.0% of toluene, 34% of butyl acetate; double bond equivalent: 550 g/mol; available from Hitachi Chemical Company, Ltd.
   - Hitaloid 7988: a linear acrylic polymer having an acryloyl group as a pendant group; weight average molecular weight: 60000; solid content concentration: 33.0%; solvent: 60.0% of toluene, 7% of ethyl acetate; double bond equivalent: 310 g/mol; available from Hitachi Chemical Company, Ltd.
   - IRR 742: a linear acrylic polymer having an acryloyl group as a pendant group; weight average molecular weight: 18000; solid content concentration: 55.4%; solvent: butyl acetate; double bond equivalent: 1800 g/mol; available from Daicel-Allnex Ltd.
D CPI-210S: diphenyl [4-(phenylthio)phenyl] sulfonium tris(pentafluoroethyl)trifluorophosphate; trade name "CPI-210S", available from San-Apro Ltd.
E Irgacure 184: 1-hydroxycyclohexyl phenyl ketone, available from BASF

### Solvent

MMPGAC: 1-methoxy-2-propyl acetate

To summarize the above, configurations of the present invention and variations thereof will be described below.
[1] A resin composition containing components (A) to (E) below.
   Component (A): a polyfunctional alicyclic epoxy compound having a molecular weight of less than 10000
   Component (B): a polyfunctional (meth)acrylic compound having a molecular weight of less than 10000
   Component (C): a linear polymer having, in a side chain thereof, a functional group that is reactive with a functional group of the component (A) and/or the component (B), and having a weight average molecular weight (in terms of polystyrene by GPC) of 10000 or greater
   Component (D): a photocationic polymerization initiator
   Component (E): a photoradical polymerization initiator
[2] The resin composition according to [1], where the molecular weight of the polyfunctional alicyclic epoxy compound of the component (A) (in the case where the polyfunctional alicyclic epoxy compound is an oligomer or a polymer, the weight average molecular weight (in terms of polystyrene by GPC)) is from 8000 to 100, 7000 to 130, 5000 to 150, 2000 to 150, 1000 to 150, or 500 to 150.
[3] The resin composition according to [1] or [2], where the polyfunctional alicyclic epoxy compound of the component (A) is at least one selected from the group consisting of (i) a compound having an epoxy group formed from two adjacent carbon atoms and an oxygen atom constituting an alicyclic ring (alicyclic epoxy group), (ii) a compound having an epoxy group directly bonded to an alicyclic ring through a single bond, and (iii) a compound having an alicyclic ring and a glycidyl group.
[4] The resin composition according to any one of [1] to [3], where the polyfunctional alicyclic epoxy compound of the component (A) is a compound represented by Formula (a).
[5] The resin composition according to any one of [1] to [4], where the molecular weight of the polyfunctional (meth)acrylic compound of the component (B) (in the case where the polyfunctional (meth)acrylic compound is an oligomer or a polymer, the weight average molecular weight (in terms of polystyrene by GPC)) is from 8000 to 100, 5000 to 200, 3000 to 250, 1500 to 250, or 1000 to 250.
[6] The resin composition according to any one of [1] to [5], where the number (total number) of the acryloyl group and/or the methacryloyl group in a molecule of the polyfunctional (meth)acrylic compound of the component (B) is 3 or greater, or 5 or greater, and the upper limit of the number is 15, 12, or 10.
[7] The resin composition according to any one of [1] to [6], where the polyfunctional (meth)acrylic compound of the component (B) is aliphatic (meth)acrylate, alicyclic (meth)acrylate, or aromatic (meth)acrylate.
[8] The resin composition according to any one of [1] to [7], where the polyfunctional (meth)acrylic compound of the component (B) is linear or branched aliphatic (meth)acrylate.
[9] The resin composition according to any one of [1] to [8], where the functional group that is reactive with a functional group of the component (A) in the linear polymer of the component (C) is a 3- to 4-membered cyclic ether group and/or a hydroxy group.
[10] The resin composition according to any one of [1] to [9], where the functional group that is reactive with a functional group of the component (B) in the linear polymer of the component (C) is a radically polymerizable group.
[11] The resin composition according to any one of [1] to [10], where the linear polymer in the component (C) is a linear acrylic polymer having a (meth)acryloyl group and/or a cyclic ether group as a pendant group.
[12] The resin composition according to any one of [1] to [11], where the weight average molecular weight (in terms of polystyrene by GPC)) of the linear polymer in the component (C) is from 500000 to 10000, 300000 to 10000, 150000 to 10000, or 100000 to 10000.
[13] The resin composition according to any one of [1] to [12], where a functional group equivalent of the component (C) is from 5000 to 100 g/mol, 3000 to 120 g/mol, 2000 to 150 g/mol, 1200 to 300 g/mol, or 900 to 300 g/mol.
[14] The resin composition according to any one of [1] to [13], where a double bond equivalent (or (meth)acryloyl group equivalent) of the linear polymer of the component (C) is from 5000 to 100 g/mol, 3000 to 120 g/mol, 2000 to 150 g/mol, 1500 to 200 g/mol, or 1200 to 200 g/mol.
[15] The resin composition according to any one of [1] to [13], where the component (C) is a compound in which the linear polymer contains a (meth)acryloyl group as a pendant group and no cyclic ether group is contained, and the double bond equivalent is from 1000 to 100 g/mol, 800 to 120 g/mol, 500 to 150 g/mol, or 400 to 200 g/mol.
[16] The resin composition according to any one of [1] to [13], where the component (C) is a compound in which the linear polymer contains both a (meth)acryloyl group and a cyclic ether group as pendant groups, and the double bond equivalent is from 2000 to 300 g/mol, 1500 to 400 g/mol, 1000 to 500 g/mol, or 1000 to 600 g/mol.
[17] The resin composition according to any one of [1] to [16], where a content of the component (A) is from 3 to 40 wt.% relative to the total amount of the curable compounds contained in the resin composition, the preferable upper limit thereof is 30 wt.%, 20 wt.%, or 15 wt.%, and the preferable lower limit thereof is 5 wt.%.
[18] The resin composition according to any one of [1] to [17], where a content of the component (B) is from 50 to 90 wt.% relative to the total amount of the curable compounds contained in the resin composition, the preferable upper limit thereof is 85 wt.%, and the preferable lower limit thereof is 35 wt.%, 40 wt.%, 45 wt.%, 55 wt.%, or 65 wt.%.
[19] The resin composition according to any one of [1] to [18], where a total content of the component (A) and the component (B) is from 60 to 98 wt.% relative to the total amount of the curable compounds contained in the resin composition, the preferable upper limit thereof is 95 wt.%, and the preferable lower limit thereof is 70 wt.%, 75 wt.%, 80 wt.%, 85 wt.%, or 90 wt.%.
[20] The resin composition according to any one of [1] to [19], where the content of the component (C) is from 2 to 50 parts by weight per 100 parts by weight of the total of the component (A) and the component (B) contained in the resin composition, the preferable upper limit thereof is 35 parts by weight, 25 parts by weight, 15 parts by weight, or 10 parts by weight, and the preferably lower limit is 3 parts by weight, 4 parts by weight, or 5 parts by weight.
[21] The resin composition according to any one of [1] to [20], which is a resin composition for forming a hard coating layer.
[22] Use of the resin composition described in any one of [1] to [20] for forming a hard coating layer.
[23] A cured product of the resin composition described in any one of [1] to [20].
[24] A hard coating layer formed from a cured product of the resin composition described in any one of [1] to [20].
[25] A hard coating film provided with a hard coating layer formed from a cured product of the resin composition described in any one of [1] to [20].
[26] An electronic device provided with a hard coating layer formed from a cured product of the resin composition described in any one of [1] to [20].
[27] A molded product provided with a hard coating layer formed from a cured product of the resin composition described in any one of [1] to [20].

### Industrial Applicability

The resin composition according to an embodiment of the present invention can be used for forming a hard coating layer and can form, by irradiating the resin composition with an active energy ray, a hard coat layer that is transparent and has excellent visibility, that has a high surface hardness, excellent scratch resistance and crack resistance, and that can suppress occurrence of cracks even in the case where thermal shock is applied and even in the case where the film thickness is increased.

Furthermore, since the resin composition of an embodiment of the present invention has low cure shrinkage and a small difference of the coefficient of thermal expansion from that of a substrate, a hard coating layer having excellent curl resistance can be formed.

When the resin composition according to an embodiment of the present invention is used, a hard coating film, a molded product, and an electronic device that are provided with a hard coating layer having crack resistance, a high surface hardness, and excellent scratch resistance can be provided.

## Claims

1. A resin composition for forming a hard coating layer, the resin composition comprising: components (A) to (E) below:
component (A): a polyfunctional alicyclic epoxy compound having a molecular weight of less than 10000;
component (B): a polyfunctional (meth)acrylic compound having a molecular weight of less than 10000;
component (C): a linear polymer having, in a side chain thereof, a functional group that is reactive with a functional group of the component (A) and/or the component (B), and having a weight average molecular weight (in terms of polystyrene by GPC) of 10000 or greater;
component (D): a photocationic polymerization initiator; and
component (E): a photoradical polymerization initiator.

2. The resin composition for forming a hard coating layer according to claim 1, wherein the component (C) is a linear acrylic polymer having a (meth)acryloyl group and/or a cyclic ether group as a pendant group.

3. The resin composition for forming a hard coating layer according to claim 1 or 2, wherein an equivalent of the functional group of the component (C) is from 5000 to 100 g/mol.

4. The resin composition for forming a hard coating layer according to any one of claims 1 to 3, wherein a content of the component (C) is from 50 to 2 parts by weight per 100 parts by weight of the total of the component (A) and the component (B) contained in the resin composition for forming a hard coating layer.

5. The resin composition for forming a hard coating layer according to any one of claims 1 to 4, wherein the component (A) is a compound represented by Formula (a) below: 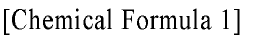 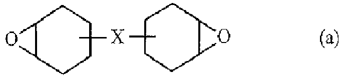 where, X represents a single bond or a linking group, and an alkyl group may be bonded to one or more carbon atoms constituting a cyclohexane ring.

6. A hard coating film comprising a hard coating layer formed from a cured product of the resin composition for forming a hard coating layer described in any one of claims 1 to 5.

7. An electronic device comprising a hard coating layer formed from a cured product of the resin composition for forming a hard coating layer described in any one of claims 1 to 5.

8. A molded product comprising a hard coating layer formed from a cured product of the resin composition for forming a hard coating layer described in any one of claims 1 to 5.
